Europäisches Patentamt

European Patent Office

Office européen des brevets

(11) Veröffentlichungsnummer: **0 167 956 B1**

(12) EUROPÄISCHE PATENTSCHRIFT

(45) Veröffentlichungstag der Patentschrift: 06.03.91

(51) Int. Cl.⁵: **B32B 27/12**

(21) Anmeldenummer: **85108141.4**

(22) Anmeldetag: **01.07.85**

(54) **Gitterfolien.**

(30) Priorität: **12.07.84 DE 3425704**

(43) Veröffentlichungstag der Anmeldung:
**15.01.86 Patentblatt 86/03**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL SE**

(56) Entgegenhaltungen:
CH-A- 514 422
GB-A- 1 284 805
US-A- 3 627 620
US-A- 4 285 998

(73) Patentinhaber: **Wolff Walsrode Aktiengesellschaft**
**Postfach**
**W-3030 Walsrode 1(DE)**

(72) Erfinder: **Preiss, Holger**
**Kettenburg 29**
**W-2722 Visselhövede(DE)**
Erfinder: **Kühn, Dieter**
**Stettinerstrasse 15**
**W-3032 Fallingbostel(DE)**

(74) Vertreter: **Zobel, Manfred, Dr. et al**
**c/o BAYER AG Konzernverwaltung RP Patente Konzern**
**W-5090 Leverkusen 1 Bayerwerk(DE)**

## Beschreibung

Die vorliegende Erfindung betrifft Mehrschichtgitterfolien, die eine hohe mechanische Festigkeit aufweisen und gegebenenfalls gasdicht sind.

Gitterfolien, die aus einem Gittergewebe, wie einem Glasgewebe, oder einem nichtgewebten Gitter aus einer Kunststoffolie, aus der durch Recken, Längsschneiden und anschließender Dehnung des Materials in die Breite ein Gitter hergestellt wurde, sind bekannt. So bezieht sich die US-A-3 627 620 auf Gitterfolien aus Glasfasern, die mit einem Thermoplasten beschichtet sind. Solche Folien sind aber nicht für alle Einsatzzwecke geeignet, da sie nicht immer die gewünschte Gasdichtigkeit und/oder mechanische Festigkeit aufweisen.

Überraschenderweise erhält man solche Mehrschichtgitterfolien mit dem gewünschten Eigenschaftsniveau, wenn man einen losen Verbund aus einem Gittergewebe oder Gittergelege und einer Trägerschicht auf der freien Gitteroberfläche mit einem thermoplastischen Kunststoff vorzugsweise durch Schmelzextrudieren beschichtet.

Gegenstand der Erfindung ist eine Mehrschichtgitterfolie erhalten durch Beschichtung der freien Gitteroberfläche eines losen Verbundes aus einer Trägerschicht und einem Gittergewebe oder Gittergelege mit einem elastomeren thermoplastischen Beschichtungskunststoff, dadurch gekennzeichnet, daß als thermoplastischer Beschichtungskunststoff ein Copolymerisat aus Ethylen und Acrylsäure und/oder Acrylaten mit $C_1$-$C_4$ im Alkoholrest eingesetzt wird und daß das Gittergelege ein Filmlaminat aus einem Olefinpolymerisat ist.

Das erfindungsgemäß zum Einsatz kommende Gitter ist ein nicht gewebtes Gittergelege aus Kunststofffolien, aus denen das Gittergewebe durch Reckung, Längsschneiden, Dehnung der einzelnen Folienbahn in die Breite und anschließendem Übereinanderlegen und Verbinden von mindestens zwei dieser so erhaltenen netzartigen Gewebe hergestellt wurde wie es z-B. in der DE-AS 22 36 286 oder in der DOS 2 440 520 beschrieben wird. Solche Gitter können aus Filmlaminaten, bestehend aus einer Polyolefinfolie, vorzugsweise Polyethylenfolie und einer Folie aus einem Olefincopolymerisat hergestellt werden. Vorzugsweise werden zur Herstellung der Gittergelege Filmlaminate wie sie in der DE-AS 22 36 286 beschrieben sind, verwendet.

Als Trägerschicht für das Gitter können Folien aus thermoplastischen Kunststoffen wie Polyethylen, Polyamid, Polypropylen, Polyacrylnitril, Polyvinylchlorid, Polyvinylidenchlorid, Polyvinylalkohol, aus Copolymeren aus Ethylen/Vinylalkohol oder Verbunde solcher Fo lien eingesetzt werden. Besonders vorteilhaft hat sich als Trägerschicht eine Verbundfolie aus einem Polyethylen oder einem Polypropylen als Außenschicht, einer Haftvermittlerschicht aus einem modifizierten Polyolefin, einer Gassperrschicht aus verseiftem Ethylenvinylacetatcopolymerisat mit 50 bis 80 Mol-% Vinylacetateinheiten, die zu wenigstens 90 % verseift sind, einer Haftvermittlerschicht aus modifiziertem Polyolefin und einer weiteren Schicht aus Polyethylen oder einem Polypropylen bewährt. Die Dichte dieser Polymeren sollte vorzugsweise im Bereich von 0,975 bis 0,950 $g/cm^3$ und einen Schmelzflußindex von 0,1 bis 7 g/10 Min. bei 190 $°$ C/2,16 $kP/cm^2$ Druck aufweisen. Als Gassperrschicht wird vorzugsweise ein Ethylen/Vinylacetatcopolymerisat verwendet, das insbesondere 60 bis 75 Mol-% Vinylacetateinheiten auf weist, die zumindest zu 90 %, vorzugsweise zu mehr als 95 % verseift sind, oder eine Schicht aus Polyamid; Polyvinylalkohol oder Polyacrylnitril.

Zur Herstellung der Haftvermittlerschichten werden modifizierte Polyolefine eingesetzt. Es sind dies vorzugsweise Polyolefine mit Carboxylgruppen, wie z.B. Polypropylen oder Polyethylen, die mindestens ein Monomer aus der Gruppe der $\alpha,\beta$ einfach ungesättigten Dicarbonsäuren, wie z.B. Maleinsäure, Fumarsäure, Itaconsäure oder deren Anhydriden, Säureester, Säureamide oder Säureimide copolymerisiert oder aufgepropft enthalten, Copolymerisate von Ethylenen mit Acrylsäure, Methacrylsäure, $\alpha,\beta$ einfach ungesättigten Carbonsäuren und/oder deren Metallsalzen oder mit $\alpha,\beta$-ungesättigten Carbonsäuren und/oder deren 1-4 C-Atomen Alkylestern oder Säuremetallsalzen pfropfpolymerisierte Polyolefine wie Polyethylen oder Propylen. Besonders bevorzugt sind Polyolefine wie Polypropylen oder ein Copolymerisat von Propylen und Ethylen mit maximal 1 Gew.-% aufgepfropftem $\alpha,\beta$ einfach ungesättigten Dicarbonsäureanhydrid wie Maleinsäureanhydrid.

Zur Beschichtung werden vorzugsweise elastomere thermoplastische Polymerisate eingesetzt, die einen E-Modul von 15 - 150 $N/mm^2$, vorzugsweise von 25 - 100 $N/mm^2$ nach DIN 53 457 aufweisen. Insbesondere sind dies Copolymerisate aus Ethylen, Acrylsäure und/oder Acrylaten mit $C_1$-$C_4$ im Alkoholrest wie z.B. Ethylacrylat, wobei die Acrylsäure und/oder Acrylateinheiten 1 bis 25 Mol-%, vorzugsweise 4 - 20 Mol-% der Copolymerisate ausmachen.

Zur Herstellung der erfindungsgemäßen Verbundgitterfolien wird das Gittergewebe oder -gelege auf die Trägerfolie gelegt und gegebenenfalls nach bekannten üblichen Verfahren mit diesen verbunden wie z.B. durch Kaschieren oder Extrusionslaminierung, vorzugsweise aber nur lose aufeinandergelegt, wobei der eigentliche Verbund zur erfindungsgemäßen Verbundgitterfolie durch die Beschichtung mit der freien Gitterobefläche elastomeren Polymerisat vorzugsweise durch Schmelzextrusion in üblichen Apparaturen erfolgt.

Die erfindungsgemäßen Verbundgitterfolien eignen sich im weitesten Sinn als Verpackungsmaterialien, da sie eine unerwartet hohe Ein- und Weiterreißfestigkeit aufweisen und bei Ausrüstung der Trägerschicht mit einer Gassperrschicht, insbesondere als Abdeckplanen, wie sie zur Schädlingsbekämpfung durch Begasung verwendet werden. Die gasdichten erfindungsgemäßen Verbundgitterfolien zeigen daher nicht nur eine ausreichende Gasdichtigkeit bei Begasung von Paletten, losen Schüttgütern oder ganze Lagerhallen mit Methylbromid oder Phosphin, sondern auch eine ausreichende Festigkeit, so daß bei der Begasung keine Störungen durch Einreißen oder Weiterreißen der Abdeckplanen zu befürchten sind.

Beispiel

Es wurde eine Mehrschichtfolie, die als Trägerfolie eine Polyethylenschicht, Haftvermittlerschicht, eine Schicht aus verseiftem Ethylenvinylacetatcopolymerisat, eine Haftvermittlerschicht und eine Polyethylenschicht aufweist und eine Stärke von 75 μm hat und aus einem nichtgewebten Gittergelege aus Filmlaminaten aus Polyvinylalkohol/Polyethylen/Polyvinylalkohol besteht, und wobei die freie Gitteroberfläche mit einem Copolymerisat aus Ethylenbutylacrylatcopolymeren mit 17 Mol-% Butylacrylat beschichtet worden ist, hergestellt. Wie in der nachfolgenden Tabelle angegeben, zeigt eine solche Verbundgitterfolie unerwartet hohe mechanische Festigkeit und eine ausreichende Gasdichtigkeit, um bei der Schädlingsbekämpfung durch Begasung mit Methylbromid eingesetzt werden zu können.

Tabelle:

| | Einheit | | Prüfmethode |
|---|---|---|---|
| Dicke | µm | 240 | DIN 53 370 |
| Flächengewicht | g/m² | 175 | DIN 53 352 |
| Reißkraft | längs | 100 | DIN 53 455 |
| | quer | 110 | |
| Reißdehnung | längs | 30 | DIN 53 455 |
| | quer | 50 | |
| Weiterreißkraft | längs | 125 | DIN 53 363 |
| | quer | 70 | |
| Schädigungsarbeit | N cm | 220 | |
| Schädigungskraft | N | 420 | DIN 53 373 |
| Schädigungsweg | mm | 18 | |
| $O_2$-Durchlässigkeit | $\dfrac{cm^3}{m^2 \cdot 25h \cdot bar}$ | 10 | DIN 53 380 |

**Ansprüche**

1. Mehrschichtgitterfolie erhalten durch Beschichtung der freien Gitteroberfläche eines losen Verbundes aus einer Trägerschicht und einem Gittergewebe oder Gittergelege mit einem elastomeren, thermoplastischen Beschichtungskunststoff, dadurch gekennzeichnet, daß als thermoplastischer Beschichtungskunststoff ein Copolymerisat aus Ethylen und Acrylsäure und/oder Acrylaten mit $C_1$-$C_4$ im Alkoholrest eingesetzt wird und daß das Gittergelege ein Filmlaminat aus einem Olefinpolymerisat ist.

2. Mehrschichtgitterfolie nach Anspruch 1, dadurch gekennzeichnet, daß als Trägerschicht eine Polyethylen-, Polyamid-, Polypropylen-, Polyacrylnitril-, Polyvinylchlorid, Polyvinylidenchlorid-, Polyvinylalkahol-, Ethylen/Vinylalkoholcopolymerfolie oder Verbunde solcher Folien eingesetzt wird.

4

3. Mehrschichtgitterfolie nach Anspruch 1, dadurch gekennzeichnet, daß die Trägerschicht aus einer Verbundfolie aus einer Polyethylen- oder Polypropylenschicht als Außenschicht, einer Haftvermittlerschicht, einer Gassperrschicht, einer Haftvermittlerschicht und aus einer Polyethylen- oder Polypropylenschicht besteht.

4. Mehrschichtgitterfolie nach Anspruch 1-3, dadurch gekennzeichnet, daß der elastomere, thermoplastische Beschichtungskunststoff einen E-Modul von 15-150 N/mm$^2$ nach DIN 53 457 aufweist.

5. Mehrschichtgitterfolien nach Ansprüchen 1-4, dadurch gekennzeichnet, daß der Beschichtungskunststoff ein Ethylenbutylacrylatcopolymer ist.

6. Mehrschichtgitterfolien nach Ansprüchen 1-5, dadurch gekennzeichnet, daß sie durch Schmelzextrusionsbeschichtung des Verbundes aus Trägerschicht und Gittergewebe oder -gelege erhalten wurden.

7. Verwendung der Mehrschichtgitterfolien nach wenigstens einem der vorhergehenden Ansprüche als Abdeckplane bei Begasungen.


## Claims

1. A multilayer lattice film obtained by coating of the exposed lattice surface of a loose composite of a supporting layer and a woven or nonwoven lattice fabric with an elastomeric thermoplastic, characterized in that the thermoplastic used for coating is a copolymer of ethylene and acrylic acid and/or acrylates containing 1 to 4 C atoms in the alcohol part and in that the nonwoven lattice is a film laminate of an olefin polymer.

2. A multilayer lattice film as claimed in claim 1, characterized in that a polyethylene, polyamide, polypropylene, polyacrylonitrile, polyvinyl chloride, polyvinylidene chloride, polyvinyl alcohol, ethylene/vinyl alcohol copolymer film or composites of such films are used as the supporting layer.

3. A multilayer lattice film as claimed in claim 1, characterized in that the supporting layer consists of a composite film of a polyethylene or polypropylene layer as the outer layer, a coupling layer, a gas barrier layer, a coupling layer and a polyethylene or polypropylene layer.

4. A multilayer lattice film as claimed in claims 1 to 3, characterized in that the elastomeric thermoplastic used for coating has a modulus of elasticity of 15 to 150 N/mm$^2$, as measured in accordance with DIN 53 457.

5. Multilayer lattice films as claimed in claims 1 to 4, characterized in that the thermoplastic used for coating is an ethylene/butylene acrylate copolymer.

6. Multilayer lattice films as claimed in claims 1 to 5, characterized in that they are obtained by melt extrusion coating of the composite of the supporting layer and woven or nonwoven lattice fabric.

7. The use of the multilayer lattice films claimed in at least one of the preceding claims as cover sheets for gassing operations.


## Revendications

1. Feuille en treillis à couches multiples obtenue par revêtement de la surface libre du treillis d'un ensemble non lié consistant en une couche de support et un tissu à mailles ou une nappe en treillis par une résine synthétique de revêtement thermoplastique élastomère, caractérisée en ce que l'on a utilisé en tant que résine synthétique de revêtement thermoplastique un copolymère de l'éthylène et de l'acide acrylique et/ou d'acrylates d'alcools en C$_1$-C$_4$ et en ce que la nappe en treillis est une pellicule stratifiée consistant en un polymère d'oléfine.

2. Feuille en treillis à couches multiples selon la revendication 1, caractérisée en ce que l'on a utilisé en tant que couche de support une feuille de polyéthylène, de polyamide, de polypropylène, de polyacrylonitrile, de chlorure de polyvinyle, de chlorure de polyvinylidène, d'alcool polyvinylique, d'un copolymère éthylène/alcool vinylique ou une combinaison de telles feuilles.

3. Feuille en treillis à couches multiples selon la revendication 1, caractérisée en ce que la couche de support consiste en une feuille composite comprenant une couche de polyéthylène ou de polypropylène en couche extérieure, une couche d'adhérence, une couche de barrière aux gaz, une couche d'adhérence et une couche consistant en un polyéthylène ou polypropylène.

4. Feuille en treillis à couches multiples selon les revendications 1 à 3, caractérisée en ce que la résine synthétique élastomère thermoplastique de revêtement a un module d'élasticité de 15 à 150 N/mm$^2$ selon norme allemande DIN 53 457.

5. feuilles en treillis à couches multiples selon les revendications 1 à 4, caractérisées en ce que la résine synthétique de revêtement est un copolymère éthylène/acrylate de butyle.

6. Feuilles en treillis à couches multiples selon les revendications 1 à 5, caractérisées en ce qu'elles ont été obtenues par revêtement par extrusion à l'état fondu de l'ensemble formé par la couche de support et une étoffe à mailles ou une nappe en treillis.

7. Utilisation des feuilles en treillis à couches multiples selon au moins une des revendications qui précèdent en tant que bâches de couverture pour des gazages.